# EUROPEAN PATENT APPLICATION

(11) **EP 1 479 979 A1**
(43) Date of publication of application: **24.11.2004**
(21) Application number: 04009383.3
(22) Date of filing: 21.04.2004
(51) Int. Cl.: F24D 3/14

(54) **Panel for climate control of enclosed spaces**

(30) Priority: 22.05.2003 IT TV20030079
(71) Applicant: R.D.Z. S.p.A., 33077 Sacile (Pordenone) (IT)
(72) Inventor: Agostinetto, Daniele, 31010 Farra di Soligo (Prov. of Treviso) (IT); Zaia, Franco, 31016 Cordignano (Prov. of Treviso) (IT)
(74) Representative: Modiano, Guido, Dr.-Ing.

(57) **Abstract**

An unfinished panel (1), particularly for climate control systems, comprising a first layer (2) of insulating material that has, at a first surface (3), seats (4) for the arrangement of a plurality of pipes (5) adapted to convey a heat transfer fluid, the pipes being anchored and/or embedded in the seats by a second screed layer (10) that is associated at the first surface, the first layer having, on the opposite side with respect to the first surface, means (19) for abutment and/or connection to a wall and/or floor and/or ceiling.

## Description

The present invention relates to a panel for climate-controlling enclosed spaces, such as for example homes, civil buildings, offices, laboratories, conference halls and locations reserved for exhibitions and shows.

Currently it is known to provide climate control systems that require the on-site provision of appropriate hydraulic circuits, which are usually composed of pipes made of synthetic material or, more rarely, copper.

Such pipes are usually embedded in the plaster of walls or ceilings according to a method that is conceptually similar to the one generally used to provide underfloor heating systems.

It is also known to apply on-site prefabricated panels that are constituted by a layer of insulating material, usually polystyrene, with which a finishing layer, generally composed of a plasterboard panel, is associated.

Grooves for accommodating pipes made of synthetic material that allow to convey the heat transfer fluid are provided in the finishing layer, starting from the surface thereof that lies adjacent to the layer of insulating material.

The first drawback of these known kinds of climate control system is that they produce constraints in their possible applications; therefore, they do not allow versatility in use, since although panels with various types of finishing layer are available, it is nonetheless not possible to meet the most disparate requirements that occur in individual specific cases.

Another drawback that further constrains such known types of climate control system and limits their versatility is that the hydraulic distribution circuits can be provided only by using the special parts and piping systems offered by the supplier.

Another important drawback is that known types of prefabricated panel are excessively heavy and bulky, with consequent negative effects on transport costs, on practicality of installation and on the possibility to handle them easily at the building site.

This leads to a further drawback, which resides in the fact that during the handling and/or transport of the panels their finishing layer is susceptible to damage and/or breakage.

Another drawback is that the presence of grooves on the finishing layer locally reduces the thickness of the layer, accordingly reducing some important properties thereof, such as for example fire resistance if a finishing layer made of a specifically provided plasterboard panel known as fire-resistant plasterboard panel is used.

The aim of the present invention is to solve the above-cited problems, eliminating the drawbacks of the prior art, by providing a panel that allows to obtain climate control systems that have good versatility in use and therefore can be integrated and/or adapted easily in the various types of enclosed space or building, so as to meet the most disparate needs or requests, for example allowing wall and ceiling applications as well as applications in a fiber false ceiling as well as underfloor applications.

Within this aim, an object of the present invention is to provide a panel that allows to obtain systems that in addition to heating enclosed spaces also allow to dehumidify and cool them.

Another object is to provide a panel that allows to provide a system that is capable of achieving optimum heat transmission and distribution.

A further object is to provide a panel that allows to provide a system that can be installed without compromising the aesthetic value of the rooms or of any other enclosed space.

Another object is to provide a panel that can be applied rapidly and easily by the operator.

A further object is to provide a panel that in addition to allowing to obtain a system by installing a limited number of components can also be handled easily and safely, so that it is not susceptible to damage during transport.

Another object is to provide a panel that is structurally simple, has low manufacturing costs and can be obtained with usual and known machines.

This aim and these and other objects that will become better apparent hereinafter are achieved by an unfinished panel, particularly for climate control systems, characterized in that it comprises a first layer of insulating material that has, at a first surface, seats for the arrangement of a plurality of pipes adapted to convey a heat transfer fluid, which are anchored and/or embedded in said seats by a second screed layer that is associated at said first surface, said first layer having, on the opposite side with respect to said first surface, means for abutment and/or connection to a wall and/or floor and/or ceiling.

Further characteristics and advantages of the present invention will become better apparent from the following detailed description of a particular embodiment thereof, illustrated by way of non-limiting example in the accompanying drawings, wherein:
Figure 1 is a front view of a system for climate-controlling enclosed spaces, which is composed of one or more panels that are rigidly coupled to a wall and comprise a plurality of pipes that are associated with a supply circuit;
Figure 2 is a front view of two mutually adjacent panels and of a portion of the supply circuit;

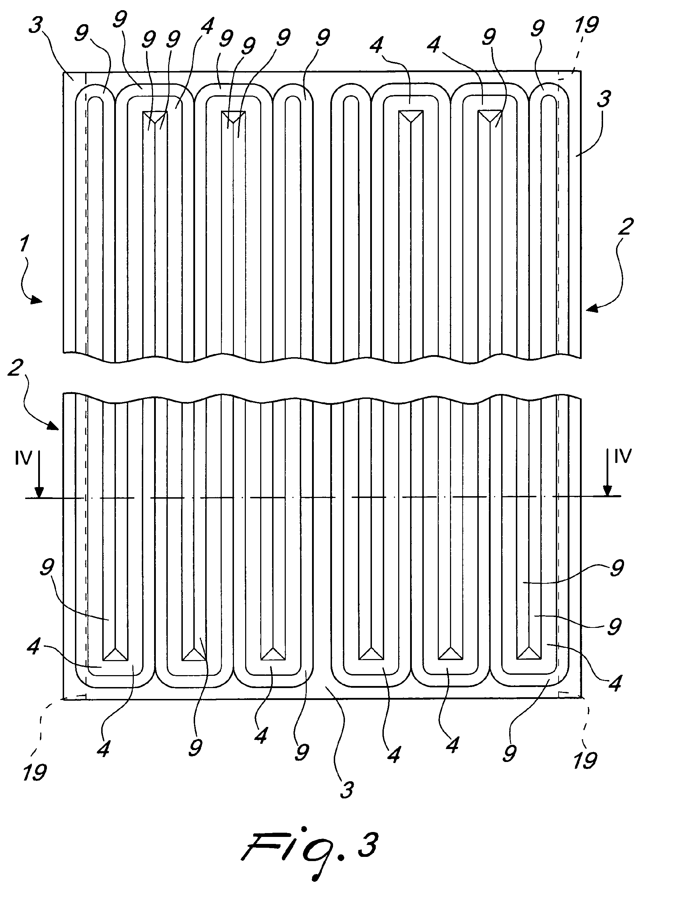

Figure 3 is a partially sectional detail front view of a single panel;
Figure 4 is a suitably enlarged-scale sectional detail view of the individual panel, taken along the line IV-IV of Figure 3;
Figure 5 is a front view of a possible layout for installation in contact with a wall;
Figures 6 and 7 are sectional perspective and top views of two mutually adjacent panels that are associated with the wall at the rear and with a finishing layer at the front.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 designates an unfinished panel, particularly usable to provide systems adapted to allow climate control of enclosed spaces such as for example the rooms of preset buildings.

The unfinished panel 1, which is substantially flat and has a preferably rectangular plan shape, comprises a first layer, designated by the reference numeral 2, which has a preset thickness and is made of an insulating material, such as for example polystyrene, cork, rock wool or pressed ceramic wool, expanded polyurethane or expanded polyethylene.

At a first surface, designated by the reference numeral 3, of the first layer 2 there are longitudinally provided seats, each designated by the reference numeral 4, for the arrangement of a plurality of pipes, generally designated by the reference numeral 5, which are suitable to convey a preset heat transfer fluid, which is not shown.

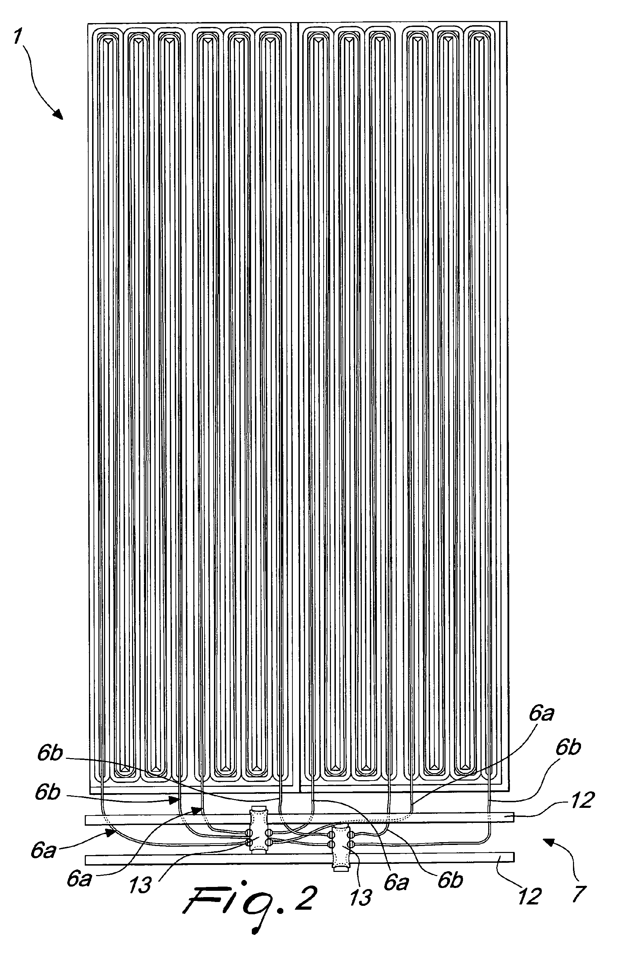

With reference to Figure 2, the pipes 5 of two adjacent seats 4 can be connected in pairs to each other proximate to the upper or lower ends of the seats 4, so as to assume a preset coiled circuit configuration.

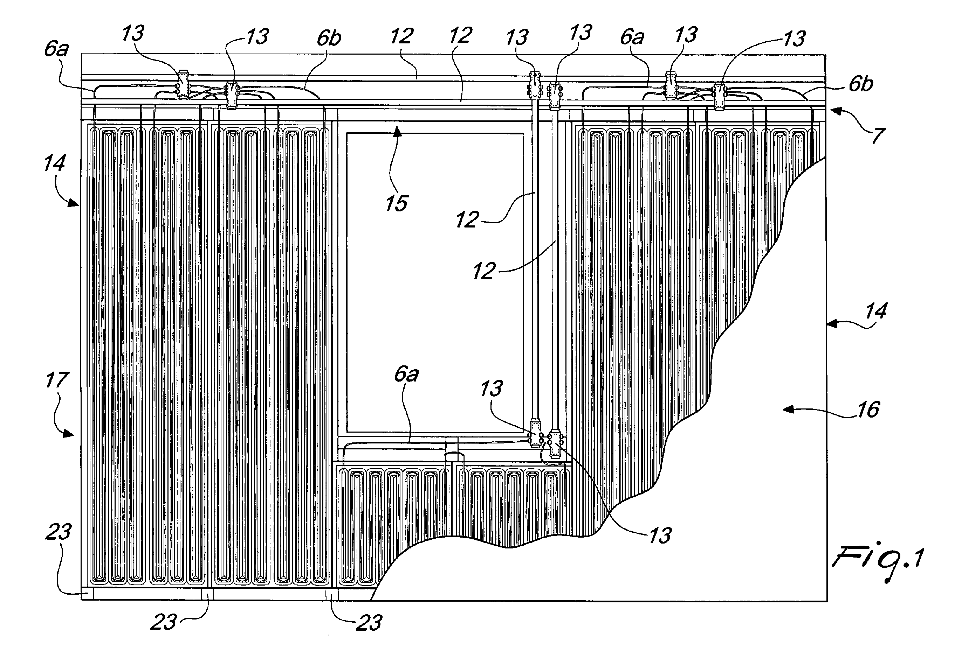

The pipes 5 form a coiled path and have, preferably at the upper or lower ends of the unfinished panel 1, a delivery 6a and a return 6b for connection, as shown in Figure 1, to a circuit, generally designated by the reference numeral 7, for distributing the heat transfer fluid to the pipes 5 of the unfinished panels 1.

In the described embodiment, the seats 4 are provided approximately vertically, at a preset distance from each other, so as to affect at least part of the height and width of the first surface 3 of the first layer 2.

Each seat 4 is provided in the first surface 3 so as to form, together with the region for blending with the surface, a profile that is approximately Ω-shaped in transverse cross-section.

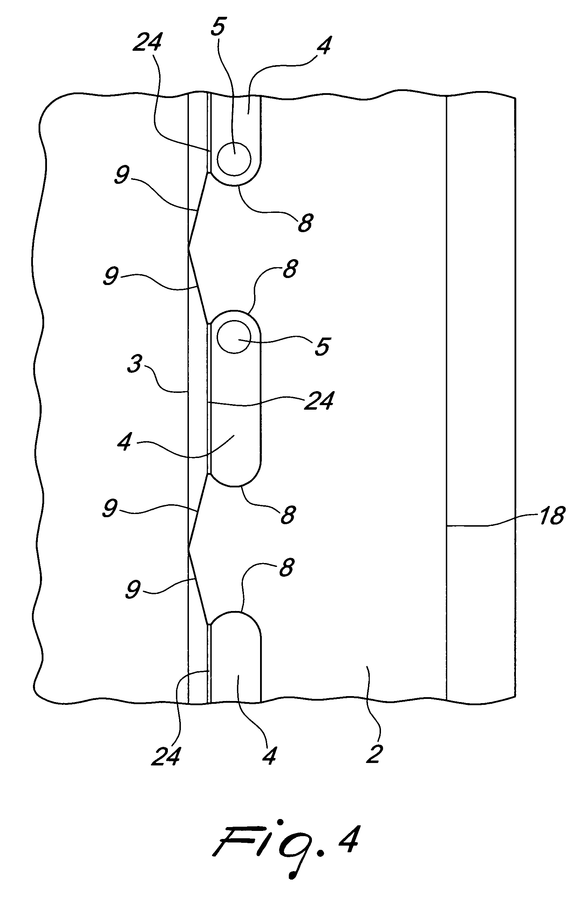

In greater detail (see the detail of Figure 4), the seats 4 have a first flat internal portion that is blended at its sides with respective second portions 8 that are rounded with a preset radius of curvature and are substantially shaped complementarily with respect to the facing or adjacent portion of the cylindrical surface of the corresponding pipes 5 arranged thereat.

It is optionally also possible to arrange each pipe 5 approximately at the longitudinal central axis of the respective seat 4, so as to make it equidistant with respect to the corresponding second portions 8 thereof.

Each one of the second portions 8 is blended with a third oblique flat portion 9, which in turn is blended with an adjacent third flat portion 9 that corresponds to an adjacent seat 4 and forms therewith, in a transverse cross-section, an approximately V-shaped profile in which the vertex is directed outward.

As shown in Figure 4, material is removed starting from the first surface 3 of the first layer 2 in order to obtain the seats 4 so that the seats form downward and/or upward a region 24 that has an approximately rectangular plan shape and provides connection to the first layer 2.

A second screed layer 10 is associated with the first layer 2 and is preferably deposited by pouring at the first surface 3, so as to allow, by filling the region of the seats 4 that is not occupied by pipes 5, the embedding and/or anchoring of the pipes within the seats.

The deposition by pouring of the second screed layer 10 is performed so that it overflows outside the seats 4 and the respective third flat portions 9, accordingly forming a second flat and continuous surface 11 for the front covering or cladding of the first layer 2.

Optionally, during deposition by pouring of the second screed layer 10, a net of synthetic fiber, not shown, is placed inside it; said net is designed to increase the mechanical strength characteristics of the second screed layer 10 after its solidification.

The circuit 7 is composed of one or more pairs of supply pipes, designated by the reference numeral 12 in Figure 2, which are connected to respective distribution manifolds, not shown, and are appropriately controlled by suitable branch manifolds 13, which are in turn selectively connected, by means of the deliveries 6a and the returns 6b, to the selected pipes 5 of one or more preset unfinished panels 1.

In the embodiment shown in Figure 1, two pairs of pipes 12 are provided that are mutually connected by means of respective branch manifolds 13 and are arranged respectively horizontally at the region of a wall 14 located above the unfinished panels 1 and vertically at the region that is adjacent to a lateral edge of a window, designated by the reference numeral 15, that is associated with the wall 14.

As an alternative, it is also possible to arrange the unfinished panels 1 starting from a preset height of the wall 14, so as to allow to arrange the pairs of supply pipes 12 at the underlying free region of the wall 14 thus obtained.

In providing the climate control system, suitable actuators, such as electrothermal valves, not shown, are also installed in order to provide selective adjustment of the temperature of one or more preset rooms.

Once the unfinished panels 1 are connected to the circuit 7 it is then possible to associate with them, at the second surface 11 of the second screed layer 10, a third finishing layer, designated by the reference numeral 16.

The on-site application of the third finishing layer 16 allows such layer to be made of a material that is particularly suitable for the surrounding environment: such third finishing layer 16 can in fact be made of plasterboard, mortar skim, scagliola or lime skim.

The unfinished panel 1 can be rigidly coupled to a wall and/or ceiling and/or floor; in the embodiment shown in Figure 1, the reference numeral 17 generally designates a climate control system, or part thereof, which is provided by applying one or more laterally mutually adjacent unfinished panels 1, for example at the wall 14 of a room, which is not shown.

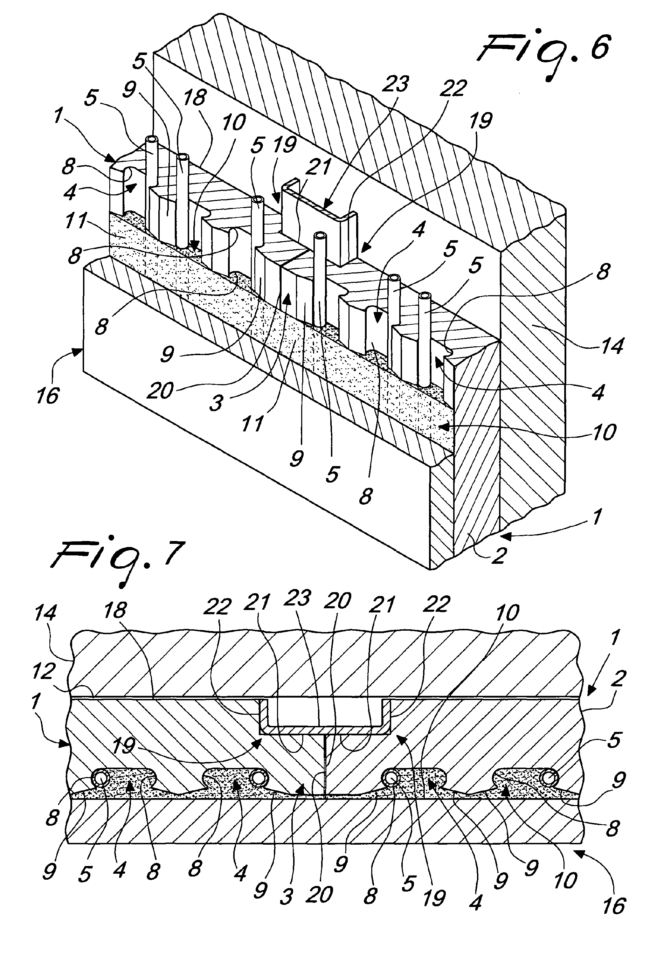

With reference to Figures 4, 6 and 7, the first layer 2 of an individual unfinished panel 1 in fact has, at the third surface 18 that is directed away from the first surface 3, means for connection to said wall, which are preferably constituted by a recess 19 that is formed longitudinally along part of the lateral edges 20 of the first layer 2, so as to affect its entire height.

Each recess 19 has, in a transverse cross-section, an approximately L-shaped profile and is therefore constituted by a fourth step-like surface 21, which is parallel to the first surface 3 and is blended, on the opposite side with respect to the respective lateral edge 20 of the first layer 2, with a fifth step-like surface 22 that is perpendicular thereto.

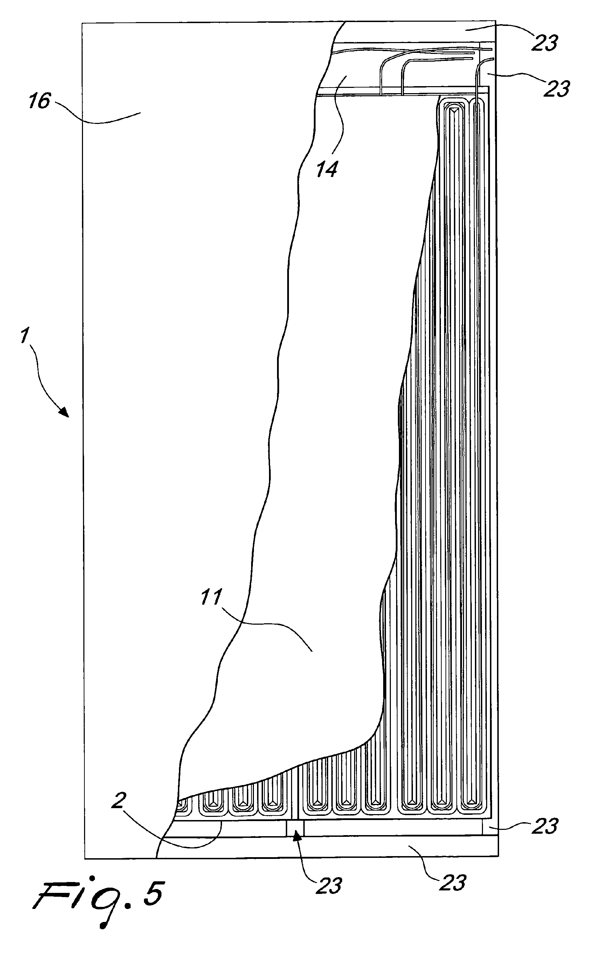

As shown in Figures 5, 6 and 7, mating the facing lateral edges 20 of two adjacent unfinished panels 1 forms a connecting joint between the fourth step-like surfaces 21 of the respective recesses 19, so that said surfaces form, together with the corresponding fifth step-like surfaces 22, a profile that is approximately C-shaped or U-shaped and is substantially complementary with respect to a mated fixing bracket, designated by the reference numeral 23, that is associated with the wall 14 or rigidly coupled thereto.

It has thus been found that the invention has achieved the intended aim and objects, an unfinished panel having been provided which by virtue of the possibility to finish it in the final step of the installation of the system allows to obtain systems that can be integrated and/or adapted easily in any type of enclosed space or building, so as to meet the most disparate requirements or requests, for example allowing applications to walls, ceilings, fiber false ceilings and floors.

It is also evident that said panel, by being unfinished, can also be handled easily and without damage during transport.

Moreover, the unfinished panel thus provided allows to provide a system that is capable of achieving optimum heat transmission and distribution, since the second screed layer, in addition to anchoring the pipes in their respective seats, acts as an excellent heat distribution element, and the presence of the abutment recesses for the respective fixing brackets likewise allows to eliminate the thermal bridge that would otherwise occur due to their possible contact with the third finishing layer.

Finally, the provision of the seats for arranging the pipes at the first layer of insulating material allows to avoid reducing the thickness of the third finishing layer in order to obtain optional grooves for accommodating said pipes, thus preserving its thermal and mechanical characteristics, such as for example its fire resistance.

The invention is of course susceptible of numerous modifications and variations, all of which are within the scope of the appended claims.

The materials used, as well as the dimensions that constitute the individual components of the invention may of course be more pertinent according to specific requirements.

The various means for performing certain different functions need not certainly coexist only in the illustrated embodiment but can be present per se in many embodiments, including ones that are not illustrated.

The characteristics indicated as being advantageous, convenient or the like may also be omitted or be replaced with equivalents.

The disclosures in Italian Patent Application No. TV2003A000079 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An unfinished panel, particularly for climate control systems, **characterized in that** it comprises a first layer of insulating material that has, at a first surface, seats for the arrangement of a plurality of pipes suitable to convey a heat transfer fluid, which are anchored and/or embedded in said seats by a second screed layer that is associated at said first surface, said first layer having, on the opposite side with respect to said first surface, means for abutment and/or connection to a wall and/or floor and/or ceiling.

2. The panel according to claim 1, **characterized in that** it has a flat and rectangular shape, said seats being provided approximately vertically at a preset distance from each other so as to affect at least part of the height and width of said first surface of said first layer that has a preset thickness.

3. The panel according to claims 1 and 2, **characterized in that** each one of said seats is provided on said first surface so as to form, together with the region for blending with said surface, an approximately Ω-shaped profile in transverse cross-section.

4. The panel according to claims 1 and 3, **characterized in that** said seats have a first internal flat portion that is blended at its sides with respective second portions that are rounded with a preset radius of curvature and are substantially shaped complementarily with respect to the facing or adjacent portion of the cylindrical surface of the corresponding pipes arranged thereat.

5. The panel according to claims 1 and 4, **characterized in that** each one of said second portions is blended with a third flat portion that is arranged obliquely and is in turn blended with an adjacent third flat portion that corresponds to an adjacent seat of said seats, forming therewith, in a transverse cross-section, a profile that is approximately V-shaped with the vertex directed outward.

6. The panel according to claims 1 and 5, **characterized in that** said second screed layer is preferably deposited by pouring at said first surface of said first layer, so as to allow, by filling the region of said seats that is not occupied by said pipes, their embedding and/or anchoring within said seats.

7. The panel according to claims 1 and 6, **characterized in that** the deposition of said second screed layer by pouring is performed so that it overflows outside said seats and said third flat portions, accordingly forming a second flat and continuous surface for the front covering or cladding of said first layer.

8. The panel according to claims 1 and 7, **characterized in that** during the deposition of said second screed layer by pouring, a synthetic fiber net is placed inside it, said net being designed to increase the mechanical strength characteristics of said second screed layer following its solidification.

9. The panel according to one or more of claims 1 and 8, **characterized in that** once said one or more unfinished panels are installed and connected to a circuit for distributing the heat transfer fluid to said pipes, a third finishing layer is associated with said one or more unfinished panels, at said second surface of said second screed layer.

10. The panel according to claims 1 and 9, **characterized in that** said abutment and/or connection means are constituted by a recess that is formed longitudinally along part of the lateral edges and along the entire height of said first layer, at the third surface thereof that is directed away from said first surface.

11. The panel according to claims 1 and 10, **characterized in that** said recess has, in a transverse cross-section, an approximately L-shaped profile so as to form a fourth step-like surface that is arranged approximately parallel to said first surface and is blended, on the opposite side with respect to the respective lateral edge of said first layer, with a fifth step-like surface that is perpendicular thereto.

12. The panel according to one or more of the preceding claims, **characterized in that** when the facing lateral edges of two of said mutually adjacent unfinished panels are placed in mutual contact, a connecting joint is formed between said fourth step-like surfaces of the respective recesses, so that said fourth surfaces form, together with said fifth step-like surfaces, a profile that is approximately C-shaped or U-shaped and is substantially complementary to the mated fixing bracket that is associated or associable with said wall.

13. The panel according to one or more of the preceding claims, **characterized in that** each one of said pipes is arranged approximately at the longitudinal central axis of the respective seat of said seats, so as to be equidistant with respect to the corresponding second portions.
